# EUROPEAN PATENT APPLICATION

(11) **EP 1 992 880 A2**
(43) Date of publication of application: **19.11.2008**
(21) Application number: 08008317.3
(22) Date of filing: 02.05.2008
(51) Int. Cl.: F24D 3/10

(54) **Membrane expansion tank having a shell wall shaped in a particular way**

(30) Priority: 14.05.2007 IT pd20070172
(71) Applicant: Cimm S.p.A., 31030 Castello di Godego TV (IT)
(72) Inventor: Renzo, Tagon, 31033 Castelfranco Veneto TV (IT)

(57) **Abstract**

This has to do with a membrane expansion tank where one of the two shells is concave, whose roundness can align with the cylindrical configuration of the body that it is put beside. (Fig. 2)

## Description

This is an expansion tank composed of two rounded metallic shells connected together, which hold an elastic membrane creating two chambers separated from one another.

Said tanks are connected to the thermohydraulic plant and can be inside or outside the boiler (central heating plant).

If said tanks are part of the boiler, they are positioned behind the boiler or the heat exchanger or the condenser, and in the case where the configuration of said appliances is cylindrical, the positioning of the expansion tank on the cylindrical bodies is carried out using a flat element touching said cylindrical bodies at a single point.

In these cases the external dimension of the boiler is determined by the size of said cylindrical bodies and the size of the expansion tank that, as is well known, has slightly rounded shell parts.

This is the state of the art of the various boiler manufacturers with an expansion tank incorporated into the boiler.

It is well known that one of the characteristics taken into account when selecting a boiler, when the power and other factors are equal, is its size.

We need only recall that in autonomous systems of apartment blocks, the boiler (in particular the wall boiler) is located inside the kitchen, perhaps even in line with the furniture and appliances. In this case the size factor, given the increasingly small measurements of current apartments, is very important.

The purpose of this patent is to make boilers with a small incorporated expansion tank, without reducing the capacity of said expansion tank.

This is achieved by making expansion tanks with a part of the wall of at least one of the two shells, instead of being rounded outwards, has a concave shape whose profile can fit the round cylindrical body it is put alongside.

In this way the volumes of the shell at the ends of the concave tract, and which rise out at the bottom of the concave area, occupy the available spaces until now unused, which are on the internal part of the tangential surface positioned against the cylindrical body concerned.

The solution is so original and innovative that it revolutionises, defying common sense, a concept that is so consolidated that no modification of the kind could have been imagined.

The realisation of the expansion tank according to the invention is carried out by moulding one of the shells with a concave section in the middle, so the profile of said concave part is in contact with the round cylindrical body against which it will be placed.

Also, in order to strengthen the concave surface there is a suitable number of stiffening ribs.

In order to fully exploit the principle of concavity, obtaining a better result for the capacity of the tank, on the shell with the concave part there is a pressed piece above the opposite shell.

We should remember that the expansion tank can have any shape, like for example a parallelepiped or the shape of a doughnut.

With the realisation of the expansion tank according to the invention you can obtain, without prejudice to the size of the current boiler, a greater tank capacity.

Advantageously, by keeping the capacity of the tank unchanged according to the invention, compared to that of the prior art, you obtain a smaller outer size of the boiler.

What has been described is clarified by examining the attached drawings.

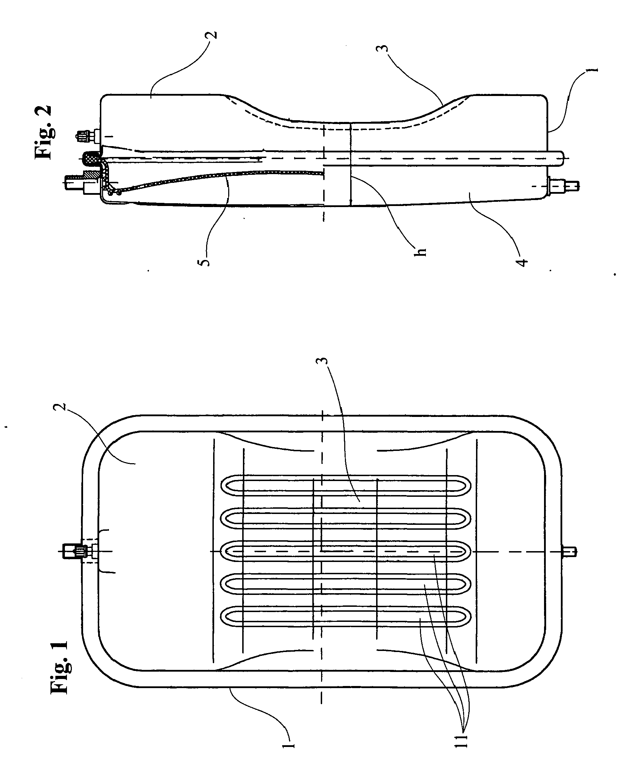

Fig. 1 shows an expansion tank with a parallelepiped shape seen from the part of the shell effected by the concavity.
Fig. 2 shows the side of the tank in fig. 1 of which half is seen externally and half seen as a cross-section.

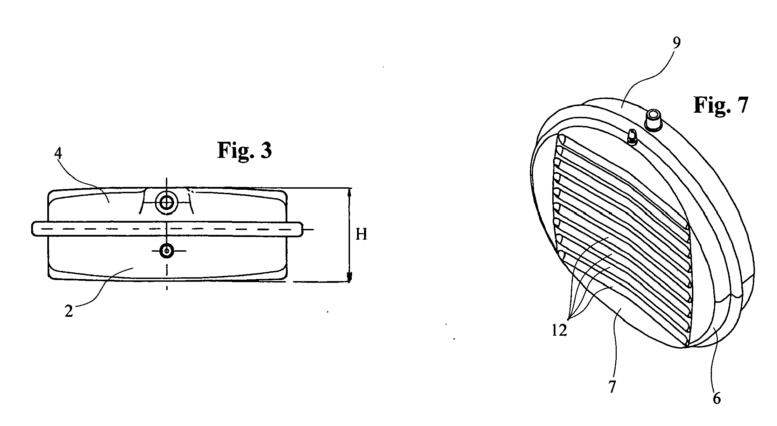

Fig. 3 shows, seen from above, the tank of fig. 1.

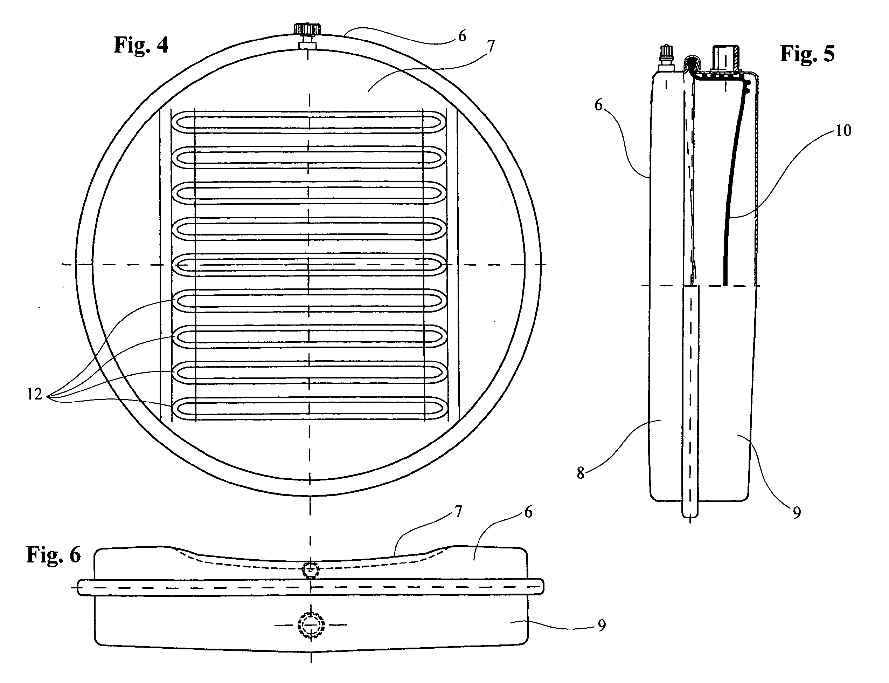

Fig. 4 shows an expansion tank in the shape of a doughnut seen from the part effected by the concavity.
Fig. 5 shows from the side one of the parts not effected by the concave profile of the tank of fig. 4, with half viewed from the outside and half seen as a cross-section.
Fig. 6 shows the tank of fig. 4 from the side of one of the parts effected by the concave profile.
Fig. 7 is a smaller three-dimensional view of the tank of fig.4 taken from above onto the front surface of the shell effected by the concavity.

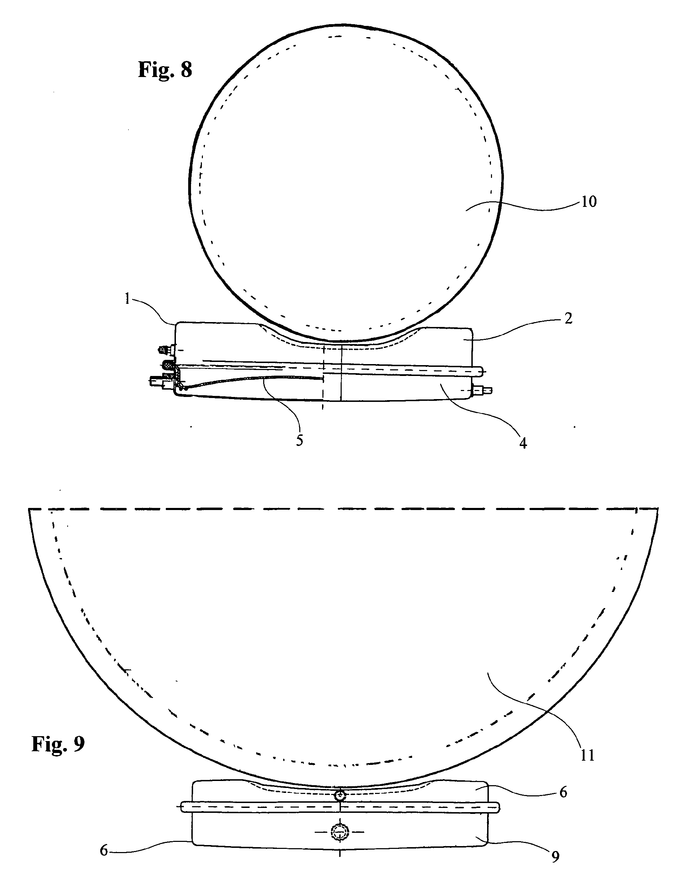

Fig. 8 shows an expansion tank in the shape of a parallelepiped with a shell that is concave next to a cylindrical body 10 that could be part of a boiler.
Fig. 9 shows an expansion tank shaped like a doughnut with a concave part next to a cylindrical body 11 that could be part of a boiler.

For the realisation of tanks 1, 6 represented in the drawings, you proceed with obtaining the shells 4, 9 with the usual outward curvature and then with obtaining the shells 2, 6 with the concavities 3, 7 with ribbing 11, 12.

Subject to the placing of the elastic membrane 5, 10, the opposing shells 4, 2 and 6, 9 are connected to each other.

Obviously the shells have been previously equipped with stub pipes and valves for the water to come in and out and for loading the gas.

The concave entity is shown by the difference h of the zones not effected by the concavity with respect to the central zone effected by the concavity.

It should be understood that what is described and represented is by way of example only and therefore not to be considered in any way restrictive.

## Claims

1. Membrane expansion tank with a shell wall that has been specially designed, **characterised by** the fact that at least one of the two shells (2, 6) has a wall whose midway section is concave (3, 7).

2. Membrane expansion tank having a shell with the wall shaped in a particular way according to claim 1 **characterised by** the fact that the concave surface (3, 7) is strengthened by ribbing (11, 12).

3. Membrane expansion tank having a shell with the wall shaped in a particular way according to claim 1 or 2, **characterised by** the fact that the concave part (3, 7) can be configured to the roundness of cylindrical bodies (10, 11) with which it has to be placed beside.

4. Membrane expansion tank having a shell with the wall shaped in a particular way according to one or more of the preceding claims, **characterised by** the fact that keeping the capacity of said expansion tank unchanged, with respect to a standard expansion tank inside the boiler, a smaller boiler is obtained.
